# EUROPEAN PATENT SPECIFICATION

(11) **EP 3 073 620 B1**
(45) Date of publication and mention of the grant of the patent: **25.03.2020**
(21) Application number: 14863416.5
(22) Date of filing: 03.07.2014
(51) Int. Cl.: H02K 11/00, H02K 21/12, H02K 11/215, H02K 11/20, H02K 7/116, H02K 7/118

(54) **WHEEL HUB MOTOR AND METHOD FOR USING SAME**
RADNABENMOTOR UND VERFAHREN ZUR VERWENDUNG DAVON
MOTEUR DE MOYEU DE ROUE ET SON PROCÉDÉ D'UTILISATION

(30) Priority: 19.11.2013 CN 201310583566
(43) Date of publication of application: 28.09.2016
(73) Proprietor: Ningbo Yinzhou Hengtai Electromechanical Co. Ltd., Ningbo, Zhejiang 315191 (CN)
(72) Inventor: LI, Aichun, Ningbo Zhejiang 315191 (CN); ZHANG, Jianchun, Ningbo Zhejiang 315191 (CN)
(74) Representative: Dennemeyer & Associates S.A.
(86) International application number: PCT/CN2014/081543
(87) International publication number: WO 2015/074426

(56) References cited:
- WO-A1-2012/125165
- CN-A- 102 148 557
- CN-A- 102 983 671
- CN-A- 103 607 075
- CN-U- 201 478 931
- CN-U- 202 004 594
- CN-U- 202 260 955
- CN-U- 203 617 848
- CN-Y- 2 456 360
- CN-Y- 201 051 694

## Description

### Technical Field

The present invention relates to the field of motor technology, and specifically, to a hub motor used in an electric bicycle and a method of using the same.

### Description of Related Art

At present, there is a booster bicycle in the market, in which a booster sensor is installed between a frame and a crank chain wheel of an electric bicycle. When riding the electric bicycle, a rider drives the crank chain wheel to rotate through pedals. The crank chain wheel drives the wheels of the electric bicycle to rotate through a chain to drive the electric bicycle to move forward. While the booster sensor converts a rotating speed of the crank chain wheel into an analog signal and transmits it to a controller. Then the controller controls a hub motor to rotate, and the hub motor drives the wheels of the electric bicycle to rotate, such that the electric bicycle is driven to move forward by human power together with electric power to realize the boosting effect. Since the booster sensor needs to be installed between the frame and the crank chain wheel, and it has many parts, which need to be separately installed between the frame and the crank chain wheel, the booster sensor is inconvenient to install and it is inconvenient for overall installation. Moreover, because the booster sensor is installed between the frame and the crank chain wheel, the booster sensor will be directly exposed to an external environment, thereby easily resulting in the damage to the booster sensor during use. For example, it can be hit by flying stones and attacked by acid rain in a rainy day, thereby lowering the service life of the booster sensor and affecting the normal use of the electric bicycle. Further prior art is known from document CN 202 004 594 U.

### BRIEF SUMMARY OF THE INVENTION

The technical problem to be solved by the present invention is to provide a hub motor inbuilt with a booster sensing system, which frees the user from the need to install a booster sensor between a frame and a crank chain wheel in an electric bicycle equipped with the hub motor and realizes the convenience in overall installation. It can also avoid a situation wherein the booster sensor is damaged due to its exposure to an external environment.

To address the abovementioned technical problem, the hub motor provided by the present invention according to claim 1, comprises a stationary motor shaft; a rotatable hub casing; a rotating seat that synchronously rotates with a crank chain wheel of an electric bicycle; a rotating sleeve that synchronously rotates with the hub casing; a ratchet mechanism of unidirectional transmission provided between the rotating seat and the rotating sleeve, wherein the rotating seat drives the rotating sleeve to rotate in the forward direction through the ratchet mechanism when the rotating seat rotates in a forward direction. The hub casing is internally provided with a magnet steel assembly and a Hall element assembly. The magnet steel assembly comprises a magnet steel holder that synchronously rotates with the rotating seat. Several magnet steels annularly distributed around the motor shaft are provided on the magnet steel holder. The Hall element assembly comprises at least two Hall elements, which are adjacently provided and close to the magnet steels. Signal outputs of the Hall elements are connected to a controller of the hub motor.

The magnet steel holder is an annular fixing plate, on which several circumferentially and evenly distributed magnet steel fixing holes for installing the magnet steels are provided. The annular fixing plate is movably sleeved onto the motor shaft and is fixedly connected to the hub casing.

The motor stator is provided within the hub casing. The motor stator comprises a stator bracket, which comprises a bracket inner ring and a bracket outer ring for fixing a stator core and a stator coil. A first through hole and a second through hole, which are axially perforating, are provided on the bracket inner ring. The bracket inner ring is fixed to the motor shaft in a sleeved way via the first through hole. The second through hole is provided oppositely to the magnet steel fixing holes; the Hall element assembly is fixed on the second through hole.

The first through hole communicates with the second through hole.

The motor shaft is internally provided with an axially extending cable hole. Signal output lines of the Hall elements are connected to the controller of the hub motor via the cable hole.

The present invention further discloses a using method of the hub motor, in which the hub motor is installed on the electric bicycle. In the event that the controller of the hub motor is powered on, when a rider is treading on bicycle pedals, the crank chain wheel drives the rotating seat to rotate in a forward direction through a chain, and the magnet steel holder rotates with the rotating seat in the forward direction. At this point, the Hall element assembly detects a rotational angular speed of the magnet steels and transmits relevant information to the controller; the controller controls the hub motor to operate to generate a boosting effect for the rider.

When the rider stops treading on the bicycle pedals, the magnet steel holder stops rotating. At this point, the Hall element assembly detects that the magnet steels stop rotating and transmits relevant information to the controller; the controller controls the hub motor to stop operating to stop the boosting effect.

When the rider pedals in reverse, the crank chain wheel drives the hub casing to rotate reversely through the chain. The magnet steel holder reversely rotates with the rotating seat. At this point, the Hall element assembly detects that the magnet steels are rotating in a reverse direction and transmits relevant information to the controller. The controller controls the hub motor to stop operating to stop the boosting effect.

In the case that the controller of the hub motor is powered down, the hub motor will not generate the boosting effect for the rider; the electric bicycle equipped with the hub motor is equivalent to a bicycle.

After adopting the above structure and method, the present invention has the following advantages compared to the existing technology:
The hub motor is inbuilt with a booster sensing system comprising magnet steels and Hall elements. During the riding process of the rider, the Hall elements can convert a forward rotating speed of the wheels into an analog signal and transmits it to the controller. Then the controller controls the hub motor to operate and the hub motor drives the wheels to rotate, such that the hub motor generates a boosting effect for the rider. Therefore, the boosting effect can be realized by the electric bicycle equipped with the hub motor without the need of additionally installing a booster sensor between the frame and the crank chain wheel, thereby realizing the convenience in the overall installation of the electric bicycle. Furthermore, the booster sensing system is provided within the hub motor to avoid the exposure of each of the elements of the booster sensing system to the external environment, to effectively avoid the damage to each of the elements of the booster sensing system. Therefore, the service life of the booster sensing system is extended and the normal use of the electric bicycle is ensured.

### BRIEF DESCRIPTION OF THE SEVERAL VIEWS OF THE DRAWINGS

- Fig. 1: is a structural schematic diagram of a hub motor of the present invention;
- Fig. 2: is a structural schematic diagram of an annular fixing plate;
- Fig. 3: is a structural schematic diagram of a stator bracket;
- Fig. 4: is a cross-section view of a stator bracket.

In which
- 1: a motor shaft
- 101: a cable hole
- 102: a first radial through hole
- 103: a second radial through hole
- 2: a hub casing
- 3: a magnet steel
- 4: a Hall element
- 5: an annular fixing plate
- 501: a magnet steel fixing hole
- 502: a circular inner hole
- 503: a first mounting hole
- 6: a stator bracket
- 601: a bracket inner hole
- 6011: a first through hole
- 6012: a second through hole
- 6013: a second mounting hole
- 602: a bracket outer ring
- 603: a stator core
- 7: a motor rotor
- 8: a sun gear
- 9: an inner tooth ring
- 10: a planet gear
- 11: a clutch inner ring
- 12: a clutch outer ring
- 13: a one-way bearing
- 14: an axle
- 15: a rotating seat
- 16: transmission teeth
- 17: a ratchet mechanism
- 18: a rotating sleeve
- 19: an end cap.

### DETAILED DESCRIPTION OF THE INVENTION

The present invention is further illustrated below with greater details in conjunction with the accompanying drawings and the Detailed Description.

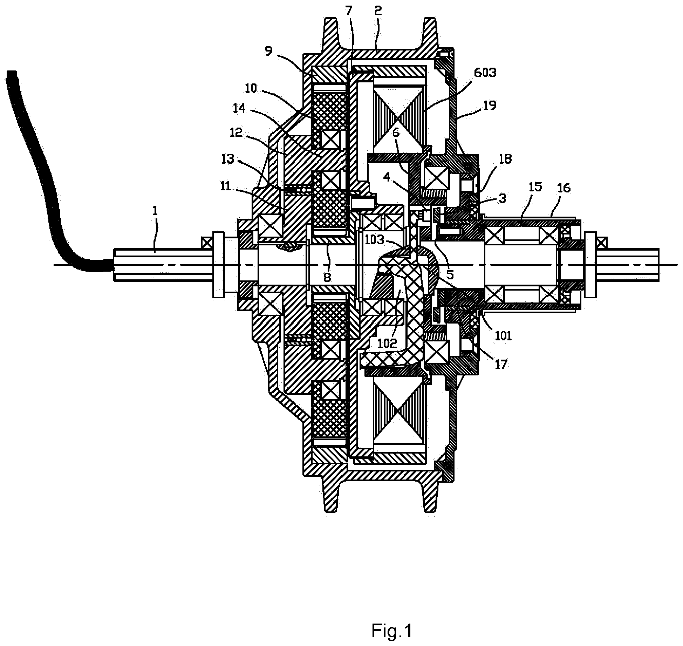

As shown in Fig. 1, the hub motor of the present invention comprises a motor shaft 1 and a hub casing 2. The motor shaft 1 is stationary and the hub casing 2 is rotatable. The hub casing 2 is connected with a motor rotor 7 through a gear assembly. The motor rotor 7 is rotatably sleeved on the motor shaft 1. The sun gear 8 is fixedly connected with the motor rotor 7. An inner surface of the hub casing 2 is provided with an inner tooth ring 9 that is in interference fit with the hub casing 2. Several circumferentially distributed planet gears 10 are provided between the inner tooth ring 9 and the sun gear 8. A clutch inner ring 11 is fixed onto the motor shaft 1 in a sleeved way. The clutch inner ring 11 is connected with the motor shaft 1 through a flat key. A periphery of the clutch inner ring 11 is sleeved with a clutch outer ring 12. A one-way bearing 13 is provided between the clutch inner ring 11 and the clutch outer ring 12. Several circumferentially distributed axles 14 are provided on the clutch outer ring 12. The planet gears 10 and the axles 14 are provided in one-to-one correspondence. The planet gears 10 are sleeved on the axles 14 and are rotatable around the axles 14.

The hub motor of the present invention further comprises a rotating seat 15 and a rotating sleeve 18. The rotating seat 15 is movably sleeved onto the motor shaft 1. A periphery of the rotating seat 15 is provided with transmission teeth 16. The rotating seat 15 is connected with a crank chain wheel of the electric bicycle through a chain. In such a way, the rotating seat 15 synchronously rotates with the crank chain wheel. The rotating sleeve 18 is fixedly connected with the end cap 19 by means of bolt, and the end cap 19 is fixedly connected with the hub casing 2 by means of bolt, such that the rotating sleeve 18 is in synchronous rotation with the hub casing 2.

A ratchet mechanism 17 of unidirectional transmission is provided between the rotating seat 15 and the rotating sleeve 18. The rotating seat 15 drives the rotating sleeve 18 to rotate in a forward direction through the ratchet mechanism 17 when the rotating seat 15 rotates in a forward direction, while the rotating seat 15 cannot drive the rotating sleeve 18 to reversely rotate through the ratchet mechanism 17 when the rotating seat 15 rotates reversely. In such a way, the ratchet mechanism 17 has the effect of unidirectional transmission. When the rider is treading on the pedals, the rotating seat 15 rotates in a forward direction and thus drives the hub casing 2 to rotate in the forward direction; when the rider reversely treads on the pedals, the rotating seat 15 reversely rotates and will not drive the hub casing 2 to reversely rotate.

A magnet steel assembly and a Hall element assembly is provided within the hub casing 2.

The magnet steel assembly comprises a magnet steel holder that synchronously rotates with the rotating seat 15. Several magnet steels 3, which are annularly distributed around the motor shaft 1, are provided on the magnet steel holder.

The Hall element assembly comprises two Hall elements 4, which are adjacently provided and close to the magnet steels 3. Two of the Hall elements 4 are provided in a superposed way. Signal outputs of the Hall elements 4 are connected to the controller of the hub motor. Of course, the Hall element assembly may also comprise three or more magnet steels.

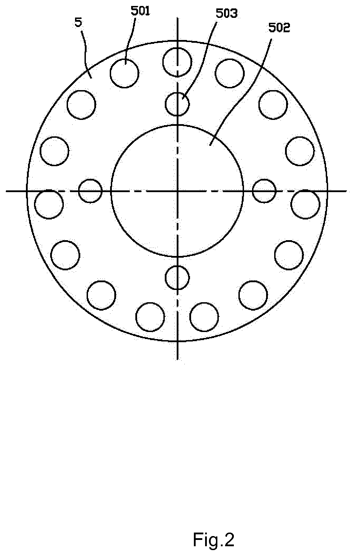

As shown in Fig. 2, the magnet steel holder is an annular fixing plate 5, on which several circumferentially and evenly distributed magnet steel fixing holes 501 for installing the magnet steels 3 are provided. The annular fixing plate 5 is movably sleeved onto the motor shaft 1 and is fixedly connected to the rotating seat 15. The annular fixing plate 5 is provided along a radial direction of the motor shaft 1. The annular fixing plate 5 is also provided with a circular inner hole 502 and several first mounting holes 503. The magnet steel fixing hole 501 and the first mounting holes 503 are circumferentially and evenly distributed around the circular inner hole 502. The first mounting hole 503 is provided between the circular inner hole 502 and the magnet steel fixing hole 501. The annular fixing plate 5 is fixed to an inner wall of the rotating seat 15. The bolt is penetrated through the first mounting hole 503 and screwed on the inner wall of the rotating seat 15 to fix the annular fixing plate 5 to the inner wall of the rotating seat 15. In such a way, the annular fixing plate 5 rotates in synchronous with the rotating seat 15.

The magnet steels 3 are fixed by the annular fixing plate 5. All of the magnet steels 3 are installed on the annular fixing plate 5, so that the magnet steels 3 can be integrally detached and installed by the annular fixing plate 5. The installation is relatively convenient.

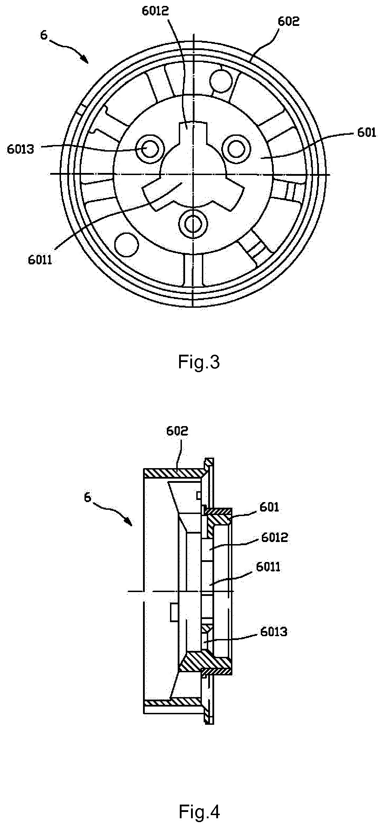

As shown in Figs. 3 and 4, a motor stator is provided within the hub casing 2. The motor stator comprises a stator bracket 6, which comprises a bracket inner ring 601 and a bracket outer ring 602 for fixing a stator core 603 and a stator coil. A first through hole 6011 and a second through hole 6012 which are axially perforating and several second mounting holes 6013 which are annularly distributed around the first through hole 6011 are provided on the bracket inner ring 601. The second mounting holes 6013 are used for fixedly mounting the stator bracket 6. The first through hole 6011 communicates with the second through hole 6012. The bracket inner ring 601 is fixed to the motor shaft 1 in a sleeved way via the first through hole 6011. The second through hole 6012 is provided oppositely to the magnet steel fixing hole 501. The Hall element assembly is fixed on the second through hole 6012. That is to say, the distance from the second through hole 6012 to a centerline of the motor shaft 1 is consistent with the distance from the magnet steel fixing hole 501 to the centerline of the motor shaft 1. Therefore, after the Hall elements 4 are fixed to the second through hole 6012 and the magnet steels 3 are fixed to the magnet steel fixing hole 501, each of the magnet steels 3, when rotated, sequentially passes through the positions exactly opposite to the Hall elements 4 when the annular fixing plate 5 rotates to drive the magnet steels 3 to rotate. When the magnet steels 3 are exactly opposite to the Hall elements 4, the Hall elements 4 detect a magnet field and send a signal to the controller; when the magnet steels 3 are not exactly opposite to the Hall elements 4, the Hall elements 4 cannot detect the magnetic field.

The motor shaft 1 is internally provided with an axially extending cable hole 101. The signal output lines of the Hall elements 4 are connected to the controller of the hub motor through the cable hole 101 in which a cable line is provided. The bottom of the cable hole 101 is provided with a first radial through hole 102 that communicates with the cable hole 101. One end of the cable line is connected with the stator coil on the motor stator and the other end of the cable line is connected with the controller. That is to say, the cable line is connected to the stator coil by sequentially passing through the cable line and the first radial through hole 102 from the controller. The controller provides power for the stator coil through the cable line. The bottom of the cable hole 101 is also provided with a second radial through hole 103 that communicates with the cable hole 101. The signal output lines of the Hall elements extend into the cable hole through the second radial through hole 103 and extend to the controller and is connected with the controller through the cable hole 101.

The Hall elements 4 are fixed to a stator bracket 6 of the motor stator. In such a way, it is convenient to fix the Hall elements 4 and the installation structure for the Hall elements 4 is simple.

The present invention further provides a using method of a hub motor, comprising the following specific processes:
The hub motor is installed on the electric bicycle. In the case that a controller of the hub motor is powered on, when a rider is treading on bicycle pedals, a crank chain wheel drives the rotating seat to rotate in a forward direction through a chain, and the magnet steel holder rotates with the rotating seat in the forward direction. At this point, the Hall element assembly detects a rotational angular speed of the magnet steels and transmits relevant information to the controller. The controller controls the hub motor to operate to generate a boosting effect for the rider.

When the rider stops treading on the bicycle pedals, the magnet steel holder stops rotating. At this point, the Hall element assembly detects that the magnet steels stop rotating and transmits relevant information to the controller; the controller controls the hub motor to stop operating to stop the boosting effect.

When the rider pedals in reverse, the crank chain wheel drives the hub casing to rotate reversely through the chain; the magnet steel holder reversely rotates with the rotating seat. At this point, the Hall element assembly detects that the magnet steels are rotating in a reverse direction and transmits relevant information to the controller. The controller controls the hub motor to stop operating to stop the boosting effect.

The judgment made by two Hall elements for the rotating direction of the magnet steels is based on the sequence that the two Hall elements sense the magnetic field of the magnet steels.

In the case that the controller of the hub motor is powered down, the hub motor will not generate a boosting effect for the rider; the electric bicycle equipped with the hub motor is equivalent to a bicycle.

The above description is merely an illustration of preferred examples in the application of the present invention, but is not construed as limiting of the claims. Other variations may be present in the structure of the present invention and are not limited to the above structure. In brief, various variations made within the scope of protection for the independent claims of the present invention will fall within the scope of the protection of the present invention.

## Claims

1. A hub motor, comprising:
- a stationary motor shaft (1);
- a rotatable hub casing (2);
- a rotating seat (15) that synchronously rotates with a crank chain wheel of an electric bicycle;
- a rotating sleeve (18) that synchronously rotates with the hub casing (2);
- a ratchet mechanism of unidirectional transmission (17) provided between the rotating seat (15) and the rotating sleeve (18), wherein the rotating seat (15) drives the rotating sleeve (18) to rotate in the forward direction through the ratchet mechanism (17) when the rotating seat (15) rotates in a forward direction;
wherein:
- a magnet steel assembly and a Hall element assembly is provided within the hub casing (2);
- the magnet steel assembly comprises a magnet steel holder that synchronously rotates with the rotating seat (15); several magnet steels (3) annularly distributed around the motor shaft (1) are provided on the magnet steel holder;
- the magnet steel holder is an annular fixing plate (5), on which several circumferentially and evenly distributed magnet steel fixing holes (501) for installing the magnet steels (3) are provided; the annular fixing plate (5) is movably sleeved onto the motor shaft (1) and is fixedly connected to the hub casing (2);
- the Hall element assembly comprises at least two Hall elements (4) which are adjacently provided and close to the magnet steels (3); signal outputs of the Hall elements (4) are connected to a controller of the hub motor; **characterized in that**
- a motor stator is provided within the hub casing (2); the motor stator comprises a stator bracket (6) which comprises a bracket inner ring (601) and a bracket outer ring (602) for fixing a stator core (603) and a stator coil; a first through hole (6011) and a second through hole (6012) which are axially perforating are provided on the bracket inner ring (601); the bracket inner ring (601) is fixed to the motor shaft (1) in a sleeved way via the first through hole (6011); the second through hole (6012) is provided oppositely to the magnet steel fixing holes (501); the Hall element assembly is fixed on the second through hole (6012);
- the first through hole (6011) communicates with the second through hole (6012); and
- the motor shaft (1) is internally provided with an axially extending cable hole (101); signal output lines of the Hall elements (4) are connected to the controller of the hub motor via the cable hole (101).

## Patentansprüche

1. Nabenmotor, umfassend:
- eine stationäre Motorwelle (1);
- ein drehbares Nabengehäuse (2);
- einen Drehsitz (15), der sich synchron mit einem Kurbelkettenrad eines Elektrofahrrads dreht;
- eine Drehhülse (18), die sich synchron mit dem Nabengehäuse (2) dreht;
- einen Ratschenmechanismus mit unidirektionaler Übertragung (17), der zwischen dem Drehsitz (15) und der Drehhülse (18) bereitgestellt ist, wobei der Drehsitz (15) die Drehhülse (18) antreibt, um sich durch den Ratschenmechanismus (17) in Vorwärtsrichtung zu drehen, wenn sich der Drehsitz (15) in einer Vorwärtsrichtung dreht;
wobei:
- innerhalb des Nabengehäuses (2) eine Magnetstahlanordnung und eine Hall-Elementanordnung bereitgestellt ist;
- die Magnetstahlanordnung einen Magnetstahlhalter umfasst, der sich synchron mit dem Drehsitz (15) dreht; an dem Magnetstahlhalter mehrere ringförmig um die Motorwelle (1) verteilte Magnetstähle (3) bereitgestellt sind;
- der Magnetstahlhalter eine ringförmige Befestigungsplatte (5) ist, auf der mehrere umfänglich und gleichmäßig verteilte Magnetstahl-Befestigungslöcher (501) zum Einbau der Magnetstähle (3) bereitgestellt sind; die ringförmige Befestigungsplatte (5) beweglich auf die Motorwelle (1) aufgestülpt und fest mit dem Nabengehäuse (2) verbunden ist;
- die Hall-Elementanordnung mindestens zwei Hall-Elemente (4) umfasst, die benachbart und nahe an den Magnetstählen (3) bereitgestellt sind; Signalausgänge der Hall-Elemente (4) mit einer Steuerung des Nabenmotors verbunden sind; **dadurch gekennzeichnet, dass**
- innerhalb des Nabengehäuses (2) ein Motorstator bereitgestellt ist; der Motorstator eine Statorhalterung (6) umfasst, die einen Halterungsinnenring (601) und einen Halterungsaußenring (602) zum Befestigen eines Statorkerns (603) und einer Statorspule umfasst; ein erstes Durchgangsloch (6011) und ein zweites Durchgangsloch (6012), die axial perforieren, an dem Halterungsinnenring (601) bereitgestellt sind; der Halterungsinnenring (601) über die erste Durchgangsbohrung (6011) in einer aufgestülpten Weise an der Motorwelle (1) befestigt ist; das zweite Durchgangsloch (6012) gegenüber den Magnetstahlbefestigungslöchern (501) bereitgestellt ist; die Hall-Elementanordnung an dem zweiten Durchgangsloch (6012) befestigt ist;
- das erste Durchgangsloch (6011) mit dem zweiten Durchgangsloch (6012) in Verbindung steht; und
- die Motorwelle (1) innen mit einem sich axial erstreckenden Kabelloch (101) versehen ist; die Signalausgangsleitungen der Hall-Elemente (4) über das Kabelloch (101) mit der Steuerung des Nabenmotors verbunden sind.

## Revendications

1. Moteur de moyeu, comprenant :
- un arbre moteur fixe (1) ;
- un carter de moyeu rotatif (2) ;
- un siège rotatif (15) qui tourne de manière synchrone avec une roue à chaîne à manivelle d'une bicyclette électrique ;
- un manchon rotatif (18), qui tourne de manière synchrone avec le carter de moyeu (2) ;
- un mécanisme à cliquet de transmission unidirectionnelle (17), prévu entre le siège rotatif (15) et le manchon rotatif (18), le siège rotatif (15) amenant le manchon rotatif (18) à tourner vers l'avant par le biais du mécanisme à cliquet (17) lorsque le siège rotatif (15) tourne vers l'avant ;
dans lequel :
- un assemblage en acier à aimants et un assemblage d'éléments Hall sont prévus à l'intérieur du carter de moyeu (2) ;
- l'ensemble en acier à aimants comprend un support en acier à aimants qui tourne de manière synchrone avec le siège rotatif (15) ; plusieurs aciers à aimants (3), répartis de manière annulaire autour de l'arbre moteur (1), sont prévus sur le support en acier à aimants ;
- le support en acier à aimants est une plaque de fixation annulaire (5) sur laquelle sont prévus plusieurs trous de fixation en acier à aimants (501), circonférentiellement et uniformément répartis pour installer les aciers à aimants (3) ; la plaque de fixation annulaire (5) est gainée de manière mobile sur l'arbre moteur (1) et est reliée fixement au carter de moyeu (2) ;
- l'ensemble d'éléments Hall comprend au moins deux éléments Hall (4) qui sont disposés de manière adjacente et à proximité des aciers à aimants (3) ; les sorties de signal des éléments Hall (4) sont connectées à un dispositif de commande du moteur de moyeu ; **caractérisé en ce que**
- un stator de moteur est prévu à l'intérieur du carter de moyeu (2) ; le stator du moteur comprend un support de stator (6) qui comprend une bague intérieure de support (601) et une bague extérieure de support (602) pour fixer un noyau de stator (603) et une bobine de stator ; un premier trou traversant (6011) et un second trou traversant (6012), qui sont perforés axialement, sont prévus sur la bague intérieure du support (601) ; la bague intérieure du support (601) est fixée à l'arbre moteur (1) de manière gainée par le biais du premier trou traversant (6011) ; le second trou traversant (6012) est prévu à l'opposé des trous de fixation en acier à aimants (501) ; l'ensemble d'éléments Hall est fixé sur le second trou traversant (6012) ;
- le premier trou traversant (6011) communique avec le second trou traversant (6012) ; et
- l'arbre moteur (1) est pourvu intérieurement d'un trou de câble s'étendant axialement (101) ; les lignes de sortie de signal des éléments Hall (4) sont connectées au dispositif de commande du moteur de moyeu par le biais du trou de câble (101).
